# EUROPEAN PATENT SPECIFICATION

(11) **EP 4 557 134 B1**
(45) Date of publication and mention of the grant of the patent: **29.07.2026**
(21) Application number: 23307004.4
(22) Date of filing: 20.11.2023
(51) Int. Cl.: G06F 21/44, G06F 21/81, G06F 21/75, G06F 1/26

(54) **POWER MANAGEMENT APPARATUS AND METHOD**
LEISTUNGSVERWALTUNGSVORRICHTUNG UND -VERFAHREN
APPAREIL ET PROCÉDÉ DE GESTION D'ÉNERGIE

(43) Date of publication of application: 21.05.2025
(73) Proprietor: NXP USA, Inc., Austin TX 78735 (US)
(72) Inventor: McKenna, Daniel, 31023 Toulouse (FR); Hureau, Loic, 31023 Toulouse (FR); Devine, Alan, 31023 Toulouse (FR)
(74) Representative: Schwarzweller, Thomas

(56) References cited:
- US-A1- 2016 371 487
- US-A1- 2020 327 259
- US-A1- 2022 300 608

## Description

### FIELD

This disclosure relates to a power management apparatus and method or power management for a system including one or more power management devices and a system-on-chip (SoC).

### BACKGROUND

An integrated circuit including at least one processor and memory, often referred to as a system-on-chip (SoC) may include security features for protection against hacking. This is particularly important for applications of SoCs in vehicle systems. These security features may still be vulnerable to hacking, for example by changing the supply voltage of the device to be out of specification. If this done in a specific manner, the SoC may having unexpected behaviour which, if used maliciously, can cause security measures to be bypassed. For vehicle applications, this unexpected behaviour can have a direct impact on the safety of the vehicle and its occupants.

Many SoCs have power provided by Power Management Integrated Circuits (PMICs). A possible attack vector is to run code on an SoC which requests the external PMIC to change the voltage in a malicious manner. The resulting change in voltage can then be used to bypass other security mechanisms and gain elevated access to the device. If the hardware is accessibly, the PMIC may be removed or disabled and an alternative or external power supply connected to the SoC which can then be controlled in order to attempt to bypass the security features. US 2016/0371487 A1 describes enhanced security of power management communications and protection from side channel attacks. US 2020/0327259 A1 describes a microcontroller and a power supply.

### SUMMARY

Aspects of the disclosure are defined in the accompanying claims. In a first aspect, there is provided a power management integrated circuit (PMIC) configured to be coupled to a system on chip (SoC) the SoC comprising at least one of a plurality of SoC power domains and a plurality of SoC clock domains; wherein each of the PMIC and the SoC comprise a shared key; and wherein the PMIC is configured to: generate a challenge; output the challenge to the SoC; generate an expected-challenge-response determined from the challenge and the shared key; receive a challenge-response from the SoC; compare the challenge response and the expected-challenge-response; and depending on an operating state and in response to the challenge-response being different to the expected-challenge-response: (i) apply a reset to the SoC, or (ii) supply power to a subset of the plurality of SoC power domains and/or (iii) enable clocks of a subset of the plurality of SoC clock domains.

In some embodiments, the subset of the plurality SoC power domains and the subset of the plurality of SoC clock domains comprise at least one of a safety critical domain and a security domain.

In some embodiments, the plurality of SoC power domains comprises a safety-critical power domain, the operating state is a safe operating state, and in response to the challenge-response being different to the expected-challenge-response, the PMIC is further configured to supply power to the safety-critical power domain.

In some embodiments, the plurality of SoC power domains comprises a security power domain, the operating state is a safe operating state, and in response to the challenge-response being different to the expected-challenge-response, the PMIC is further configured to remove power from the security power domain.

In some embodiments, the SoC comprises further circuitry, the operating state is a safe operating state, and in response to the challenge-response being different to the expected-challenge-response, the PMIC is further configured to control the SoC to apply a reset to the further circuitry.

In some embodiments, at least one of the plurality of SoC power domains comprises a SoC power domain sense output and the PMIC further comprises: a voltage monitor configured to be coupled to the SoC power domain sense output and configured to compare the SoC power domain sense output voltage with a PMIC voltage output of a PMIC and to indicate whether the operating state is at least one of a safe operating state and secure operating state based on the comparison.

In some embodiments, the PMIC further comprises a bidirectional security operating state terminal configured to be coupled to the SoC and configured to at least one of: receive a secure operating state value from the SoC ; output a secure operating mode status in response to the challenge-response being the same as expected-challenge-response; and output a non-secure operating mode status in response to the challenge-response being different to the expected-challenge-response.

In some embodiments, the PMIC is further configured after a predetermined time to: generate a further challenge; output the further challenge to the SoC; generate a further expected-challenge-response determined from the challenge and the shared key; receive a further challenge-response from the SoC; determine whether the further challenge-response is valid by comparing the further challenge response and the further expected-challenge-response; and depending on an operating state and in response to the further challenge-response being different to the further expected-challenge-response: (i) apply a reset to the SoC, or (ii) supply power to a subset of the plurality of SoC power domains and/or (iii) enable the clocks of a subset of the plurality of SoC clock domains.

In some embodiments, the PMIC further comprises a plurality of voltage regulators, each voltage regulator being configured to be coupled to a respective power domain of the plurality of SoC power domains.

In some embodiments, the PMIC further comprises a plurality of clock generators, each clock generator being configured to be coupled to a respective clock domain of the plurality of SoC clock domains.

Embodiments of the PMIC may be included in a system including a SoC coupled to the PMIC, wherein the SoC is configured to receive a challenge from the PMIC, generate a challenge-response determined from the shared key, and output the challenge response.

In a second aspect, there is provided a method of operating a power management integrated circuit (PMIC) configured to be coupled to a system on chip (SoC) comprising at least one of a plurality of SoC power domains and a plurality of SoC clock domains, wherein each of the PMIC and the SoC comprise a shared key, and wherein the method comprises: generating a challenge; outputting the challenge to the SoC; generating an expected-challenge-response determined from the challenge and the shared key; receiving a challenge-response from the SoC; comparing the challenge response and the expected-challenge-response; and depending on an operating state and in response to the challenge-response being different to the expected-challenge-response: (i) applying a reset to the SoC, or (ii) supplying power to a subset of the plurality of SoC power domains and/or (iii) enabling clocks of a subset of the plurality of SoC clock domains.

In some embodiments, the operating state is a safe operating state, the method further comprising supplying power to a safety-critical power domain of the SoC in response to the challenge-response being different to the expected-challenge-response.

In some embodiments, the operating state is a safe operating state, the method further comprising removing power from a security power domain of the SoC in response to the challenge-response being different to the expected-challenge-response.

In some embodiments, the operating state is a safe operating state, the method further comprising controlling the SoC to apply a reset in response to the challenge-response being different to the expected-challenge-response.

In some embodiments, the method further comprises comparing a voltage supplied to a SoC power domain sense output voltage with a PMIC voltage output; and indicating whether the operating state is at least one of a safe operating state and secure operating state based on the comparison.

In some embodiments, the method further comprises at least one of: receiving a secure operating state value from the SoC ;outputting a secure operating mode status in response to the challenge-response being the same as expected-challenge-response; and outputting a non-secure operating mode status in response to the challenge-response being different to the expected-challenge-response.

In some embodiments, the method further comprises after a predetermined time : generating a further challenge; outputting the further challenge to the SoC; generating a further expected-challenge-response determined from the challenge and the shared key; receiving a further challenge-response from the SoC; determining whether the further challenge-response is valid by comparing the further challenge response and the further expected-challenge-response; and depending on an operating state and in response to the further challenge-response being different to the further expected-challenge-response: (i) applying a reset to the SoC, or (ii) supplying power to a subset of SoC power domains and/or (iii) enabling the clocks of a subset of SoC clock domains.

### BRIEF DESCRIPTION OF THE DRAWINGS

In the figures and description like reference numerals refer to like features. Embodiments are now described in detail, by way of example only, illustrated by the accompanying drawings in which:
Figure 1 shows a system including a SoC and PMIC according to an embodiment.
Figure 2 illustrates a method of operating a PMIC according to an embodiment.
Figure 3 shows an authentication method for a PMIC coupled to SoC according to an embodiment.
Figure 4 illustrates an authentication method for a SoC coupled to a PMIC according to an embodiment.
Figure 5 shows a system including a SoC and PMIC according to an embodiment.

It should be noted that the Figures are diagrammatic and not drawn to scale. Relative dimensions and proportions of parts of these Figures have been shown exaggerated or reduced in size, for the sake of clarity and convenience in the drawings. The same reference signs are generally used to refer to corresponding or similar features in modified and different embodiments.

### DETAILED DESCRIPTION OF EMBODIMENTS

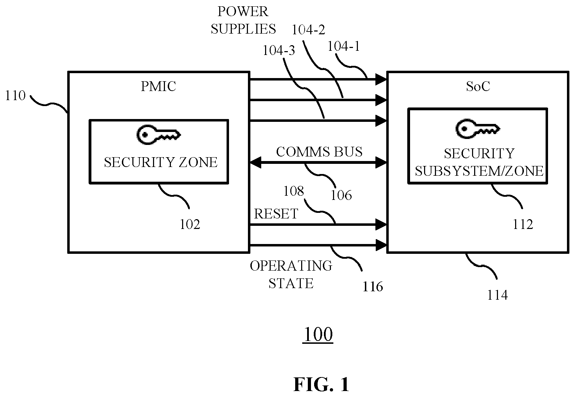

Figure 1 shows a system 100 including a SoC 114 and PMIC 110 according to an embodiment. The PMIC 110 has a security zone 102 and the SoC 114 has a security zone 112. Each of the security zones 102, 112 may be preconfigured to have a shared key, referred to herein as a pre-shared key. The term security zone as used herein may also be referred to as a security domain. A security zone may include specific hardware such as a dedicated security core, specific software or a combination of hardware and software that has a privilege level greater than the minimum level for the system, for example a supervisor level. In some examples security zone may be a predefined area of the integrated circuit that is isolated or otherwise protected from other regions of the device. The generation and storing of the pre-shared key may be done using known techniques and may for example be performed once the PMIC 110 and SoC 114 are first powered up on a production line. For example the shared key may be stored on one-time-programmable (OTP) fuses that can only be programmed by the manufacturer. In other examples, keys may be shared during each boot time by for example the Diffie Helman method. The PMIC 110 may have power supply outputs 104-1, 104-2, 104-3 connected to respective power supply inputs of the SoC 114. As illustrated, three power supply outputs 104-1, 104-2, 104-3 are shown. In other examples, the PMIC may have fewer or more power supply outputs. A digital communication bus 106 may be connected between the PMIC 110, and the SoC 114. In some examples the communication bus 106 may be an I2C bus. In other examples the communications may be transmitted via the power supply lines 104-1, 104-2, 104-3 in which case the separate communication bus 106 may be omitted. Using the power lines 104-1, 104-2, 104-3 may make the communications harder to detect and also make replacing the power supply more difficult, which may improve the resilience of the system 100 to a hacking attack. The PMIC 110 may have a reset output 108 connected to a reset input of the SoC 114. The PMIC 110 may have an operating state output 116 connected to an operating state input of the SoC 114. In some examples the operating state connections may be reversed i.e. the SoC has a reset output connected to a reset input of the PMIC and an operating state output connected to an operating state input of the PMIC. In some examples the operating state connection may be a bidirectional connection. In some examples, one of the reset output 108 or operating state output 116 may be omitted.

In operation of the system 100, the PMIC 110 may initially powered up and set up power supplies to the SoC 114 to bring it out of reset. In example SoCs with multiple power domains, only critical domains may be initially powered up, for example domains including a boot core and security subsystem.

In operation of the system 100, the PMIC 110 and SoC 114 may execute an initial handshake for example via the communication bus 106 between the PMIC 110 and SoC 114. After an initial handshake, the PMIC 110 may generate a challenge variable and send it to the SoC 114 via the communications bus 106. The challenge variable may be randomly generated to prevent "replay attacks" for example using a linear feedback shift register or other known technique. The SoC 114 may combine the challenge with the shared key to generate a response. The response may then be sent back to the PMIC 110 via the communications bus 106 who has also carried out the same calculation locally with its own shared key. The PMIC 110 then compares the two responses and if a match is found continues to boot the SoC 114. In the case of a failure, the PMIC 110 may perform one or more actions to mitigate a potential attack. In one example the PMIC 110 may apply a reset to the SoC 114. In another example, the PMIC 110 may completely remove power from SoC 114. In some examples the PMIC 110 may place the SoC 114 into a limited operation (degraded) state where, for example, security assets are locked out and are unavailable. This may be done for example by physically powering down specific supplies to specific subsystems or not applying power to additional subsystems depending on the initial power state. For examples where a PMIC supplies multiple clocks as well as power, this may be done be removing clocks from one or more clock domains of the SoC. In other examples, the PMIC may indicate a reduced operating state via the operating state output 116 and the SoC 114 may disable one or more clocks in response.

In embodiments where system 100 is part of a vehicle control system, the reduced functionality may allow safety critical functions to operate. For example if a safety-critical control area network (CAN) used in connection to a braking electronic control unit (ECU) still needs to perform cipher-based message authentication code (CMAC) verify operations then the engine and respective keys may be available until the vehicle is transitioned into a safe state and other security assets may be taken offline via clock or power gating.

In other examples, the SoC 114 may be a mixed-criticality device where some cores run safety functions whereas others run "additional services" including but not limited to services such as infotainment, over-the-air (OTA) updates and cloud connectivity. The non-safety function cores may be safely powered down when a security attack is detected whereas the safety critical cores may keep running. The latter non-safety functions typically have the largest attack surface i.e. the largest number of possible points or attack vectors where an unauthorized user can access a system and extract or corrupt data, and so may be much more vulnerable to hacking.

In some examples, the authentication process may be carried out periodically at runtime. This may check that the PMIC is not removed after the initial boot flow. The time period for rechecking can be set via one-time-programmable OTP fuses or flash memory. In some examples, the authentication process may also be carried out after wakeup from a deep power down mode.

In some examples, the pre-shared key may be used to encrypt and authenticate any data transmitted on the communications bus 106. This may prevent a threat actor sending rogue messages to the PMIC to alter settings. Encrypting the data may prevent a rogue actor from monitoring the bus 106 for specific events, such as a request for a low power transition, in order to time an attack to occur after the specific event. In some examples, the PMIC 110 may include a timeout counter, to generate timeout signal if the PMIC 110 does not receive any response from the SoC 114. This may result in an automatic reset of the SoC 114.

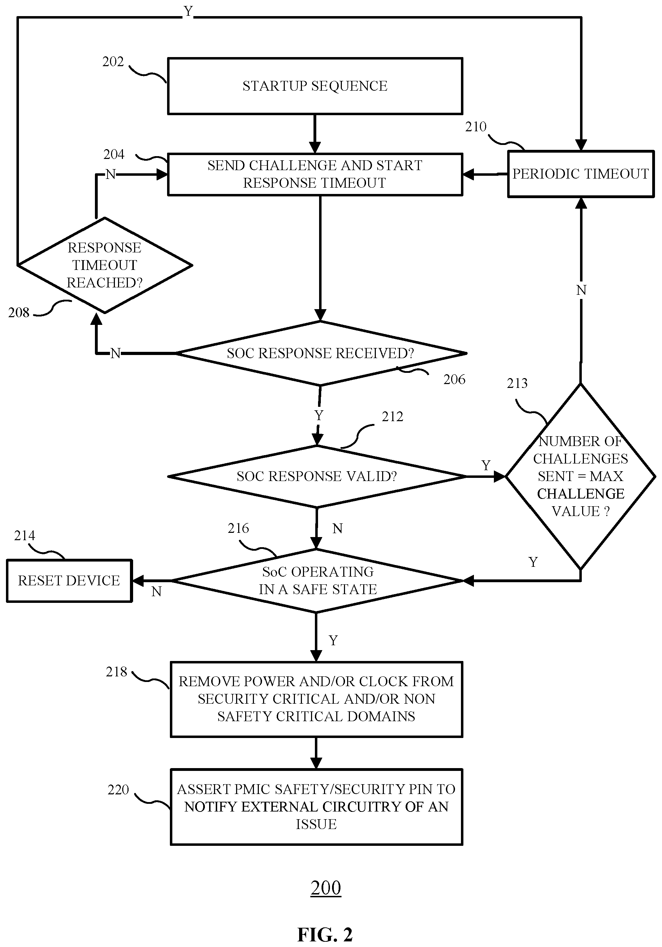

Figure 2 shows a method of operating a PMIC 200 according to an embodiment. The method may be implemented for example on PMIC 110 using logic circuitry to implement a state machine. In step 202, the PMIC may execute a startup sequence including providing power to at least one power domain of a SoC, for example SoC 114. In step 204 a challenge is sent and response time out is started. In step 206 the PMIC checks if the SOC has responded. If the SoC does not respond before the response time out the method proceeds to step 208 and checks whether the response timeout value has been reached. If the response timeout value has been reached, then in step 210 a periodic timeout starts. After the periodic timeout is reached the method returns to step 204.

Returning now to step 206, if a SoC response has been received, the method then checks whether or not the response is valid in step 212. If the response is valid, in optional step 213, the method may check whether the number of challenges sent in step 204 equals a predetermined maximum value. If the number of challenges sent is less than the maximum value, then the number of challenges sent is incremented, the method proceeds to step 210 and a periodic timeout starts as previously described. Otherwise from step 213 the method proceeds to step 216 and checks whether the SoC is in a safe operating state. In some examples, step 213 may be omitted in which case the method proceeds directly from step 212 to step 210. Returning to step 212, if the response is invalid, the method checks whether the SoC is in a safe operating state (step 216). If the SoC is not in a safe operating state, the device is reset in step 214 and the method finishes. If the SoC is in a safe operating state, in step 218 power and or clock may be removed from security critical and or non-safety critical domains. The method then proceeds to step 220 and the PMIC may assert a safety and or security pin to notify external circuitry of a potential system issue.

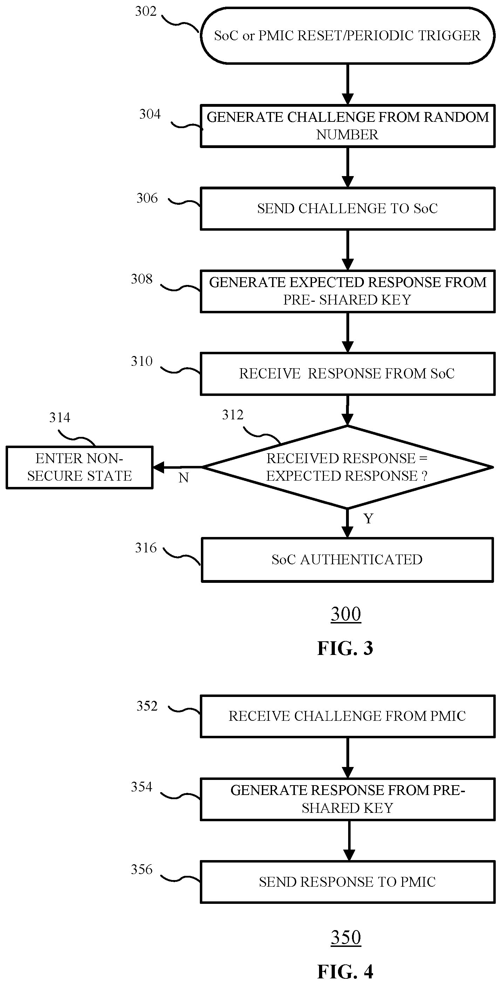

Figure 3 shows an authentication method 300 for a PMIC coupled to SoC according to an embodiment. In step 302 the method starts, the SoC and PMIC may be reset and a periodic trigger may be started. In step 304 the PMIC may generate a challenge from a random number. In step 306, the challenge may be sent to a SoC coupled to the PMIC. In step 308 the expected challenge response may be generated by the PMIC using a pre-shared key. In step 310, the response may be received from the SoC. In step 312, the PMIC may compare the received and expected challenge response. If the responses match then the method finishes in step 316 and the SoC is considered authenticated. If the responses do not match, then the PMIC may enter a non secure state in step 314.

Figure 4 shows an authentication method 350 for a SoC coupled to a PMIC according to an embodiment. In step 352 a challenge may be received from a PMIC. In step 354 the SoC generated a response from a pre-shared key. In step 356, the SoC sends a response to the PMIC. In some examples, the roles of the PMIC and the SoC as described in methods 300, 350 may be reversed.

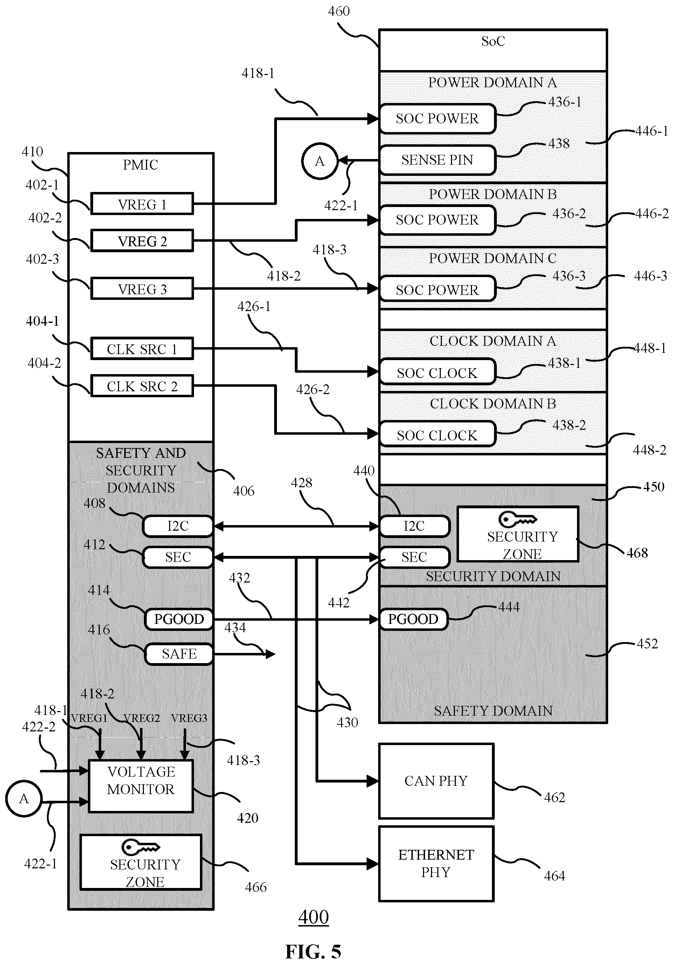

Figure 5 shows an vehicle control system 400 including a SoC 460 and PMIC 410 according to an embodiment. The SoC 460 and PMIC 410 have a pre-shared key in security zones 466, 468 respectively as described for system 100. The PMIC 410 may include voltage regulators 402-1, 402, 402-3. As illustrated three voltage regulators are shown. In other examples the PMIC may have fewer or more voltage regulators. The PMIC 410 may have clock sources 404-1, 404-2 with respective clock source outputs 426-1,426-2. As illustrated, the PMIC 410 has two clock sources. In other examples, the PMIC 410 may have fewer or more clock sources. In some examples, dependent on the SoC implementation, the clock sources 404-1, 404-2 may be omitted. The PMIC 410 includes an I2C interface 408, a security input/output pin 412, a power status pin 414, and a safety status output 434 which are connected to circuitry on the PMIC ( not shown). In other examples a SPI interface or other serial link may be used instead of I2C interface 408. The PMIC 410 includes a voltage monitor 420 having a first set of voltage regulator inputs connected to respective voltage regulator outputs 418-1, 418-2, 418-3. The voltage monitor has a first and second voltage monitor input 422-1, 422-2. The I2C interface 408, security input/output pin 412, power status (PGOOD) pin 414 which indicates when all voltage regulators 402-1, 402-2, 402-3 are working correctly, safety status output 434 and voltage monitor 420 may be located in a protected domain 406 which may also be referred to as a safety/security domain . The protected domain 406 may for example be a separate resilient domain within the PMIC which is isolated from the regulators by for example having a separate power supply. The protected domain 406 includes the security zone 466.

The SoC 460 has power domains 446-1 (power domain A), 446-2 (power domain B) , 446-3 (power domain C) each with a respective power pin 436-1, 436-2, 436-3 connected to a respective voltage regulator output 418-1, 418-2, 418-3. In other examples, power domains may have more than one associated power pin. The power domain A 446-1 may have a sense output pin 438 connected to the first voltage monitor input 422-1. In other examples, additional power domains may have a sense pin. The SoC 460 has clock domains 438-1 (clock domain A), 438-2 ( clock domain B) having a respective clock pin 438-1, 438-2 connected to respective clock source outputs 426-1, 426-2. As illustrated, the SoC 460 has three power domains and two clock domains. In other examples, the SoC may have fewer or more power domains and fewer or more clock domains. In some examples, the SoC may not receive a clock signal from a PMIC but may have another external clock source and an internal clock generation block which may derive the clocks for each clock domain internal to the SoC. The SoC 460 has an I2C interface 440 by communication bus 428, security pin 442 and associated circuitry ( not shown). The I2C interface 440 is connected to the PMIC I2C interface 408 by communication bus 428. The security pin 440 is connected to the PMIC security pin 412 by connection 430. The vehicle control system may also have a CAN PHY 462 and Ethernet PHY 464 which has a security input connected to the PMIC security pin 412 by connection 430. The CAN PHY 462 and Ethernet PHY 464 may also have data connections to the SOC 460 ( not shown).

The SOC 460 has a safety domain 452 which includes a power status pin 444 connected via connection 432 to PMIC power status pin 414. In some examples, the safety domain 452 may have a corresponding safety critical power domain (not shown) and safety critical clock domain, in other examples the safety domain may be located in a power domain shared with other circuitry, for example power domain A and the circuity may be clocked in a clock domain shared with other circuitry, for example clock domain B.

The security domain 450 includes the security zone 468 and may include software and hardware for controlling the SoC I2C interface 440. The security domain 450 may include specific hardware such as a dedicated security core, specific software or a combination of hardware and software that has a privilege level greater than the minimum level for the system. The security domain 450 may include a Hardware Security Engine (HSE) security subsystem which may be considered as the "Root of Trust" for the SoC. The HSE may run relevant security functions for applications having stringent confidentiality and/or authenticity requirements. The HSE may isolate security-sensitive information such as pre-shared keys from the application and enforce security measures on the application during run-time and system startup. In some examples, the security domain 450 may have a corresponding security power domain (not shown) and security clock domain, in other examples the security domain may be located in a power domain shared with other circuitry, for example power domain B and the circuity may be clocked in a clock domain shared with other circuitry, for example clock domain A.

After an initial handshake between the PMIC 410 and SoC 460, the PMIC 410 randomly generates a challenge variable send it to the SoC via the communications bus 428. Ensuring this challenge is truly random may prevent "replay attacks". The SoC 460 combines the challenge with the shared key to calculate a challenge response. The challenge response is then sent back to the PMIC 410 which performs a local response calculation locally with its own shared key to determine an expected challenge response. The PMIC 410 then compares the two responses i.e. the challenge response and the expected challenge response. If a match is found the boot sequence continues for the SoC 460. In the case of an authentication failure, the PMIC 410 may initiate a SoC reset, for example by signaling a security failure on the security pin 412 to which the SoC 460 react or by a dedicated reset pin (not shown). Alternatively or in addition, the PMIC 410 may remove power from one or more SoC power domains. Alternatively or in addition, the PMIC 410 in conjunction with a secure enclave on the SoC such as the HSE, may force the SoC 460 into a degraded state where, for example, security assets are locked out and unavailable. This degraded state could include physically powering down specific supplies for example a subset of the power domains 446 or clock gating specific subsystems by for example clock gating one or more clock domains 448-1, 448-2.

As a further security measure, the voltage monitor 420 may compare the power domain A sense pin 438 voltage with voltage regulator 402-1 voltage to ensure that voltage at the SoC 460 matches the output voltage. If it does not match then a signal may be output on one or both of the security pin 412 and safe status pin 416. This may ensure that PMIC supply is not being bypassed. In the case of Over Voltage/Under Voltage detection on one of the regulators 402-1, 402-2, 402-3 , the PMIC safe status, secure status pins 412, 416 may trigger at the same time the system if the system in a safe state and in a security state. The reaction to the PMIC safe status, secure status pins 412, 416 triggering may be programmable and deterministic for example to meet specific safety fault tolerant time requirements and/or specific application requirements. In other examples, other power domains may also have sense pins connected to voltage monitor 420 to perform equivalent checks.

In one example if a safety-critical CAN network used in connection to a braking ECU still needs to perform CMAC verify operations then this engine and respective keys would still be available until the vehicle could be transitioned into a safe state whereas other security assets would be taken offline via clock or power gating.

The SoC 460 may include some cores running safety functions whereas others run "additional services" such as infotainment, OTA updates, cloud connectivity, etc. The latter cores could be safely powered down when a security attack is detected whereas the former safety critical core would keep running. Given that the latter functions typically have the largest attack surface this is very desirable.

The vehicle control system 400 may react differently to a runtime security event depending on the current safety state of the vehicle. For example if the vehicle is parked then SoC 460 can be held in reset, if in motion then a controlled availability strategy may be used to lock down secure assets whilst still allowing the vehicle to operate safety critical features. Alternatively or in addition, the vehicle control system 400 may implement one or more of the methods 200, 300, 350.

Embodiments may provide a reaction to a security event to power down or clock gate security specific assets whilst still allowing safety critical logic to remain active. This may be critical for example in an automotive and industrial environment.

Embodiments implement a state machine that evaluates the different security and safety states of the device under attack to provide several controlled options to gracefully handle the security attack avoiding any life-threatening consequences

Embodiments described herein may prevent an attack where the PMIC is used for authentication but then an alternative source supplies voltages out of specification. The PMIC may monitor supplies at the SoC and continually check that the voltage matches the voltage value output by the PMIC. Embodiments with periodic (re)authentication requests may further prevent an attack which allows the PMIC to authenticate at boot and then removes the PMIC. If a potential threat is detected by PMIC, some embodiments may power down only security critical logic or non-safety critical logic within a predetermined Fault Tolerant Time Interval (FTTI). This may ensure that a safety critical subsystem still operates. Embodiments described may prevent an attack using an alternative power supply which fails at boot time (prior to any safety applications commencing) as the authentication fails. Embodiments described may prevent an attack which compromises high level software and requests the PMIC to change the voltage and/or clock to operate outside the specified value. Such an attack will fail as only the security subsystem has the pre-shared encryption key required to communicate with the PMIC and the PMIC will only allow secure registers to be altered by the authentic SoC.

A power management integrated circuit (PMIC) and method of operating a PMIC is described. The PMIC is configured to be coupled to a system on chip (SoC) including a number of power and clock domains. Each of the PMIC and the SoC have a shared key. The PMIC is configured to generate a challenge, output the challenge to the SoC and generate an expected-challenge-response determined from the challenge and the shared key. The PMIC is further configured to receive a challenge-response from the SoC and compare the challenge response with the expected-challenge-response. If the challenge response is different to the expected response, the PMIC may (i) apply a reset to the SoC, (ii) supply power to a subset of the SoC power domains and/or (iii) enable clocks of a subset of SoC clock domains.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

Features which are described in the context of separate embodiments may also be provided in combination in a single embodiment. Conversely, various features which are, for brevity, described in the context of a single embodiment, may also be provided separately or in any suitable sub combination.

The applicant hereby gives notice that new claims may be formulated to such features and/or combinations of such features during the prosecution of the present application or of any further application derived therefrom.

For the sake of completeness it is also stated that the term "comprising" does not exclude other elements or steps, the term "a" or "an" does not exclude a plurality, a single processor or other unit may fulfil the functions of several means recited in the claims and reference signs in the claims shall not be construed as limiting the scope of the claims.

## Claims

1. A power management integrated circuit, PMIC, (410) configured to be coupled to a system on chip, SoC, (460) the SoC comprising at least one of a plurality of SoC power domains (446-1, 446-2, 446-3) and a plurality of SoC clock domains (448-1, 448-2);
wherein each of the PMIC (410) and the SoC (460) comprise a shared key; and wherein the PMIC (410) is configured to:
generate a challenge;
output the challenge to the SoC;
generate an expected-challenge-response determined from the challenge and the shared key;
receive a challenge-response from the SoC;
compare the challenge response and the expected-challenge-response;
and depending on an operating state in response to the challenge-response being different to the expected-challenge-response:
(i) apply a reset to the SoC, or
(ii) supply power to a subset of the plurality of SoC power domains (446-1, 446-2, 446-3) and/or
(iii) enable clocks (438-1, 438-2) of a subset of the plurality of SoC clock domains (448-1, 448-2).

2. The PMIC (410) of claim 1, wherein the subset of the plurality SoC power domains (446-1, 446-2, 446-3) and the subset of the plurality of SoC clock domains (448-1, 448-2) comprise at least one of a safety critical domain (452) and a security domain (450).

3. The PMIC (410) of any preceding claim, wherein the plurality of SoC power domains (446-1, 446-2, 446-3) comprises a safety-critical power domain, the operating state is a safe operating state, and in response to the challenge-response being different to the expected-challenge-response, the PMIC is further configured to supply power to the safety-critical power domain .

4. The PMIC (410) of claim 3, wherein the plurality of SoC power domains (446-1, 446-2, 446-3) comprises a security power domain, the operating state is a safe operating state, and in response to the challenge-response being different to the expected-challenge-response, the PMIC is further configured to remove power from the security power domain.

5. The PMIC (410) of any preceding claim, wherein the SoC comprises further circuitry, the operating state is a safe operating state, and in response to the challenge-response being different to the expected-challenge-response, the PMIC (410) is further configured to control the SoC (460) to apply a reset to the further circuitry.

6. The PMIC (410) of any preceding claim, wherein at least one of the plurality of SoC power domains (446-1, 446-2, 446-3) comprises a SoC power domain sense output (422-1) and the PMIC further comprises: a voltage monitor (420) configured to be coupled to the SoC power domain sense output (422-1) and configured to compare the SoC power domain sense output voltage with a PMIC voltage output of a PMIC and to indicate whether the operating state is at least one of a safe operating state and secure operating state based on the comparison.

7. The PMIC (410) of any preceding claim, further comprising a bidirectional security operating state terminal (412) configured to be coupled to the SoC (460) and configured to at least one of:
receive a secure operating state value from the SoC (460) ;
output a secure operating mode status in response to the challenge-response being the same as expected-challenge-response; and
output a non-secure operating mode status in response to the challenge-response being different to the expected-challenge-response.

8. The PMIC (410) of any preceding claim, further configured after a predetermined time to:
generate a further challenge;
output the further challenge to the SoC (460);
generate a further expected-challenge-response determined from the challenge and the shared key;
receive a further challenge-response from the SoC (460);
determine whether the further challenge-response is valid by comparing the further challenge response and the further expected-challenge-response;
and depending on an operating state and in response to the further challenge-response being different to the further expected-challenge-response:
(i) apply a reset to the SoC, or
(ii) supply power to a subset of the plurality of SoC power domains (446-1, 446-2, 446-3) and/or
(iii) enable the clocks of a subset of the plurality of SoC clock domains (448-1, 448-2).

9. The PMIC (410) of any preceding claim further comprising a plurality of voltage regulators (402-1, 402-2, 402-3) , each voltage regulator being configured to be coupled to a respective power domain (446-1, 446-2, 446-3) of the plurality of SoC power domains.

10. The PMIC (410) of any preceding claim further comprising a plurality of clock generators (404-1, 404-2) , each clock generator being configured to be coupled to a respective clock domain (448-1, 448-2) of the plurality of SoC clock domains.

11. A system (400) comprising the PMIC (410) of any preceding claim, coupled to the SoC (460) , wherein the SoC (460) is configured to receive a challenge from the PMIC (410) , generate a challenge-response determined from the shared key, and output the challenge response.

12. A method (300) of operating a power management integrated circuit, PMIC, (410) configured to be coupled to a system on chip, SoC (460) comprising at least one of a plurality of SoC power domains and a plurality of SoC clock domains, wherein each of the PMIC and the SoC comprise a shared key, and wherein the method comprises:
generating a challenge (304) ;
outputting the challenge to the SoC (306) ;
generating an expected-challenge-response (308) determined from the challenge and the shared key;
receiving a challenge-response from the SoC (310) ;
comparing the challenge response and the expected-challenge-response (312);
and depending on an operating state and in response to the challenge-response being different to the expected-challenge-response:
(i) applying a reset to the SoC, or
(ii) supplying power to a subset of the plurality of SoC power domains and/or
(iii) enabling clocks of a subset of the plurality of SoC clock domains.

13. The method of claim 12, wherein the operating state is a safe operating state, the method further comprising supplying power to a safety-critical power domain of the SoC in response to the challenge-response being different to the expected-challenge-response.

14. The method of claim 12 or 13, wherein the operating state is a safe operating state, the method further comprising removing power from a security power domain of the SoC in response to the challenge-response being different to the expected-challenge-response.

## Patentansprüche

1. Eine integrierte Leistungsverwaltungsschaltung, PMIC, (410), die dazu ausgelegt ist, mit einem System-on-Chip, SoC, (460) gekoppelt zu werden, wobei das SoC mindestens eine von mehreren SoC-Leistungsdomänen (446-1, 446-2, 446-3) und mehreren SoC-Taktdomänen (448-1, 448-2) umfasst;
wobei sowohl die PMIC (410) als auch das SoC (460) einen gemeinsam genutzten Schlüssel umfassen; und wobei die PMIC (410) dazu ausgelegt ist:
eine Herausforderung zu erzeugen;
die Herausforderung an das SoC auszugeben;
eine erwartete Herausforderungsantwort zu erzeugen, die aus der Herausforderung und dem gemeinsam genutzten Schlüssel bestimmt wird;
eine Herausforderungsantwort von dem SoC zu empfangen;
die Herausforderungsantwort und die erwartete Herausforderungsantwort zu vergleichen;
und abhängig von einem Betriebszustand als Antwort darauf, dass sich die Herausforderungsantwort von der erwarteten Herausforderungsantwort unterscheidet:
(i) ein Rücksetzen auf das SoC anzuwenden, oder
(ii) eine Teilmenge der mehreren SoC-Leistungsdomänen (446-1, 446-2, 446-3) mit Leistung zu versorgen, und/oder
(iii) Takte (438-1, 438-2) einer Teilmenge der mehreren SoC-Taktdomänen (448-1, 448-2) zu aktivieren.

2. PMIC (410) nach Anspruch 1, wobei die Teilmenge der mehreren SoC-Leistungsdomänen (446-1, 446-2, 446-3) und die Teilmenge der mehreren SoC-Taktdomänen (448-1, 448-2) eine sicherheitskritische Domäne (452) und/oder eine Schutzdomäne (450) umfassen.

3. PMIC (410) nach einem der vorhergehenden Ansprüche, wobei die mehreren SoC-Leistungsdomänen (446-1, 446-2, 446-3) eine sicherheitskritische Leistungsdomäne umfassen, der Betriebszustand ein sicherer Betriebszustand ist und als Antwort darauf, dass sich die Herausforderungsantwort von der erwarteten Herausforderungsantwort unterscheidet, die PMIC ferner dazu ausgelegt ist, Leistung an die sicherheitskritische Leistungsdomäne zu liefern.

4. PMIC (410) nach Anspruch 3, wobei die mehreren SoC-Leistungsdomänen (446-1, 446-2, 446-3) eine Schutzleistungsdomäne umfassen, der Betriebszustand ein sicherer Betriebszustand ist und als Reaktion darauf, dass sich die Herausforderungsantwort von der erwarteten Herausforderungsantwort unterscheidet, die PMIC ferner dazu ausgelegt ist, Leistung aus der Schutzleistungsdomäne zu entfernen.

5. PMIC (410) nach einem der vorhergehenden Ansprüche, wobei das SoC eine weitere Schaltungsanordnung umfasst, der Betriebszustand ein sicherer Betriebszustand ist, und als Antwort darauf, dass sich die Herausforderungsantwort von der erwarteten Herausforderungsantwort unterscheidet, die PMIC (410) ferner dazu ausgelegt ist, das SoC (460) zu steuern, um eine Rücksetzung auf die weitere Schaltungsanordnung anzuwenden.

6. PMIC (410) nach einem der vorhergehenden Ansprüche, wobei mindestens eine der mehreren SoC-Leistungsdomänen (446-1, 446-2, 446-3) einen SoC-Leistungsdomänenerfassungsausgang (422-1) umfasst und die PMIC ferner Folgendes umfasst: einen Spannungsmonitor (420), der dazu ausgelegt ist, mit dem SoC-Leistungsdomänenerfassungsausgang (422-1) gekoppelt zu werden, und dazu ausgelegt ist, die SoC-Leistungsdomänenerfassungsausgangsspannung mit einem PMIC-Spannungsausgang einer PMIC zu vergleichen und basierend auf dem Vergleich anzugeben, ob der Betriebszustand ein sicherer Betriebszustand und/oder ein geschützter Betriebszustand ist.

7. PMIC (410) nach einem der vorhergehenden Ansprüche, ferner umfassend einen bidirektionalen Schutzbetriebszustandsanschluss (412), der dazu ausgelegt ist, mit dem SoC (460) gekoppelt zu werden, und dazu ausgelegt ist, mindestens eines von Folgendem zu erreichen:
einen geschützten Betriebszustandswert von dem SoC (460) zu empfangen;
einen geschützten Betriebsmodus-Status als Antwort darauf auszugeben, dass die Herausforderungsantwort die gleiche ist wie die erwartete Herausforderungsantwort; und
einen nicht geschützten Betriebsmodus-Status als Antwort darauf auszugeben, dass sich die Herausforderungsantwort von der erwarteten Herausforderungsantwort unterscheidet.

8. PMIC (410) nach einem der vorhergehenden Ansprüche, die ferner nach einer vorbestimmten Zeit dazu ausgelegt ist:
eine weitere Herausforderung zu erzeugen;
die weitere Herausforderung an das SoC auszugeben (460);
eine weitere erwartete Herausforderungsantwort zu erzeugen, die aus der Herausforderung und dem gemeinsam genutzten Schlüssel bestimmt wird;
eine weitere Herausforderungsantwort von dem SoC (460) zu empfangen;
zu bestimmen, ob die weitere Herausforderungsantwort gültig ist, durch Vergleichen der weiteren Herausforderungsantwort und der weiteren erwarteten Herausforderungsantwort;
und abhängig von einem Betriebszustand und als Antwort darauf, dass sich die weitere Herausforderungsantwort von der weiteren erwarteten Herausforderungsantwort unterscheidet:
(i) ein Rücksetzen auf das SoC anzuwenden, oder
(ii) eine Teilmenge der mehreren SoC-Leistungsdomänen (446-1, 446-2, 446-3) mit Leistung zu versorgen, und/oder
(iii) Takte einer Teilmenge der mehreren SoC-Taktdomänen (448-1, 448-2) zu aktivieren.

9. PMIC (410) nach einem der vorhergehenden Ansprüche, ferner umfassend mehrere Spannungsregler (402-1, 402-2, 402-3), wobei jeder Spannungsregler dazu ausgelegt ist, mit einer jeweiligen Leistungsdomäne (446-1, 446-2, 446-3) der mehreren SoC-Leistungsdomänen gekoppelt zu werden.

10. PMIC (410) nach einem der vorhergehenden Ansprüche, ferner umfassend mehrere Taktgeneratoren (404-1, 404-2), wobei jeder Taktgenerator dazu ausgelegt ist, mit einer jeweiligen Taktdomäne (448-1, 448-2) der mehreren SoC-Taktdomänen gekoppelt zu werden.

11. System (400), das die PMIC (410) nach einem vorhergehenden Anspruch umfasst, die mit dem SoC (460) gekoppelt ist, wobei das SoC (460) dazu ausgelegt ist, eine Herausforderung von der PMIC (410) zu empfangen, eine Herausforderungsantwort zu erzeugen, die aus dem gemeinsam genutzten Schlüssel bestimmt wird, und die Herausforderungsantwort auszugeben.

12. Verfahren (300) zum Betreiben einer integrierten Leistungsverwaltungsschaltung, PMIC, (410), die dazu ausgelegt ist, mit einem System-on-Chip, SoC (460), gekoppelt zu werden, das mindestens eine von mehreren SoC-Leistungsdomänen und mehreren SoC-Taktdomänen umfasst, wobei sowohl die PMIC als auch das SoC einen gemeinsam genutzten Schlüssel umfassen, und wobei das Verfahren Folgendes umfasst:
Erzeugen einer Herausforderung (304);
Ausgeben der Herausforderung an das SoC (306);
Erzeugen einer erwarteten Herausforderungsantwort (308), die aus der Herausforderung und dem gemeinsam genutzten Schlüssel bestimmt wird;
Empfangen einer Herausforderungsantwort von dem SoC (310) ;
Vergleichen der Herausforderungsantwort und der erwarteten Herausforderungsantwort (312);
und abhängig von einem Betriebszustand und als Antwort darauf, dass sich die Herausforderungsantwort von der erwarteten Herausforderungsantwort unterscheidet:
(i) Anwenden eines Rücksetzens auf das SoC, oder
(ii) Versorgen einer Teilmenge der mehreren SoC-Leistungsdomänen mit einer Leistung, und/oder
(iii) Aktivieren von Takten einer Teilmenge der mehreren SoC-Taktdomänen.

13. Verfahren nach Anspruch 12, wobei der Betriebszustand ein sicherer Betriebszustand ist, wobei das Verfahren ferner das Versorgen einer sicherheitskritischen Leistungsdomäne des SoC mit Leistung als Antwort darauf umfasst, dass sich die Herausforderungsantwort von der erwarteten Herausforderungsantwort unterscheidet.

14. Verfahren nach Anspruch 12 oder 13, wobei der Betriebszustand ein sicherer Betriebszustand ist, wobei das Verfahren ferner das Entfernen von Leistung aus einer Schutzleistungsdomäne des SoC als Reaktion darauf umfasst, dass sich die Herausforderungsantwort von der erwarteten Herausforderungsantwort unterscheidet.

## Revendications

1. Circuit intégré de gestion d'énergie, PMIC, (410) configuré pour être couplé à un système sur puce, SoC, (460), le SoC comprenant au moins un parmi une pluralité de domaines de puissance de SoC (446-1, 446-2, 446-3) et une pluralité de domaines d'horloge de SoC (448-1, 448-2) ;
le PMIC (410) et le SoC (460) comprenant chacun une clé partagée ; et le PMIC (410) étant configuré pour :
générer un défi ;
transmettre le défi au SoC ;
générer une réponse attendue à un défi, déterminée à partir du défi et de la clé partagée ;
recevoir une réponse au défi de la part du SoC ;
comparer la réponse au défi et la réponse attendue au défi ;
et en fonction d'un état de fonctionnement en réponse au fait que la réponse au défi est différente de la réponse attendue au défi :
(i) appliquer une réinitialisation au SoC, ou
(ii) alimenter un sous-ensemble de la pluralité de domaines de puissance du SoC (446-1, 446-2, 446-3) et/ou
(iii) activer les horloges (438-1, 438-2) d'un sous-ensemble de la pluralité de domaines d'horloge du SoC (448-1, 448-2).

2. PMIC (410) selon la revendication 1, dans lequel le sous-ensemble de la pluralité de domaines de puissance du SoC (446-1, 446-2, 446-3) et le sous-ensemble de la pluralité de domaines d'horloge du SoC (448-1, 448-2) comprennent au moins l'un d'un domaine critique de sécurité (452) et d'un domaine de sécurité (450).

3. PMIC (410) selon l'une quelconque des revendications précédentes, dans lequel la pluralité de domaines de puissance du SoC (446-1, 446-2, 446-3) comprend un domaine de puissance critique pour la sécurité, l'état de fonctionnement étant un état de fonctionnement sûr, et en réponse au fait que la réponse au défi est différente de la réponse attendue au défi, le PMIC est en outre configuré pour alimenter le domaine de puissance critique pour la sécurité.

4. PMIC (410) selon la revendication 3, dans lequel la pluralité de domaines de puissance du SoC (446-1, 446-2, 446-3) comprend un domaine de puissance de sécurité, l'état de fonctionnement étant un état de fonctionnement sûr, et en réponse au fait que la réponse au défi est différente de la réponse attendue au défi, le PMIC est en outre configuré pour retirer de l'énergie au domaine de puissance de sécurité.

5. PMIC (410) selon l'une quelconque des revendications précédentes, dans lequel le SoC comprend un circuit supplémentaire, l'état de fonctionnement étant un état de fonctionnement sûr, et en réponse au fait que la réponse ai défi est différente de la réponse attendue au défi, le PMIC (410) est en outre configuré pour commander le SoC (460) pour appliquer une réinitialisation au circuit supplémentaire.

6. PMIC (410) selon l'une quelconque des revendications précédentes, dans lequel au moins l'un de la pluralité de domaines de puissance du SoC (446-1, 446-2, 446-3) comprend une sortie de détection de domaine de puissance du SoC (422-1) et le PMIC comprend en outre : un moniteur de tension (420) configuré pour être couplé à la sortie de détection de domaine de puissance du SoC (422-1) et configuré pour comparer la tension de sortie de détection de domaine de puissance du SoC à une sortie de tension PMIC d'un PMIC et pour indiquer si l'état de fonctionnement est au moins l'un parmi un état de fonctionnement sûr et un état de fonctionnement sécurisé sur la base de la comparaison.

7. PMIC (410) selon l'une quelconque des revendications précédentes, comprenant en outre une borne d'état de fonctionnement de sécurité bidirectionnel (412) configurée pour être couplée au SoC (460) et configurée pour au moins l'une des opérations suivantes :
la réception d'une valeur d'état de fonctionnement sécurisé du SoC (460) ;
la délivrance d'un statut de mode de fonctionnement sécurisé en réponse au fait que la réponse au défi est identique à la réponse attendue au défi ; et
la délivrance d'un statut de mode de fonctionnement non sécurisé en réponse au fait que la réponse au défi est différente à la réponse attendue au défi.

8. PMIC (410) selon l'une quelconque des revendications précédentes, configuré en outre après un temps prédéterminé pour :
générer un défi supplémentaire ;
envoyer le défi supplémentaire au SoC (460) ;
générer une nouvelle réponse attendue au défi, déterminée à partir du défi et de la clé partagée ;
recevoir une nouvelle réponse au défi de la part du SoC (460) ;
déterminer si la réponse au défi supplémentaire est valide en comparant la réponse au défi supplémentaire et la réponse attendue au défi supplémentaire ;
et en fonction de l'état de fonctionnement et en réponse au fait que la réponse au défi supplémentaire est différente de la réponse attendue au défi supplémentaire :
(i) appliquer une réinitialisation au SoC, ou
(ii) alimenter un sous-ensemble de la pluralité de domaines de puissance du SoC (446-1, 446-2, 446-3) et/ou
(iii) activer les horloges d'un sous-ensemble de la pluralité de domaines d'horloge du SoC (448-1, 448-2).

9. PMIC (410) selon l'une quelconque des revendications précédentes, comprenant en outre une pluralité de régulateurs de tension (402-1, 402-2, 402-3), chaque régulateur de tension étant configuré pour être couplé à un domaine de puissance respectif (446-1, 446-2, 446-3) de la pluralité de domaines de puissance du SoC.

10. PMIC (410) selon l'une quelconque des revendications précédentes, comprenant en outre une pluralité de générateurs d'horloge (404-1, 404-2), chaque générateur d'horloge étant configuré pour être couplé à un domaine d'horloge respectif (448-1, 448-2) de la pluralité de domaines d'horloge du SoC.

11. Système (400) comprenant le PMIC (410) selon l'une quelconque des revendications précédentes, couplé au SoC (460), dans lequel le SoC (460) est configuré pour recevoir un défi du PMIC (410), générer une réponse au défi, déterminée à partir de la clé partagée, et délivrer la réponse au défi.

12. Procédé (300) de fonctionnement d'un circuit intégré de gestion d'énergie, PMIC, (410) configuré pour être couplé à un système sur puce, SoC, (460) comprenant au moins un parmi une pluralité de domaines de puissance du SoC et une pluralité de domaines d'horloge du SoC, dans lequel chacun du PMIC et du SoC comprennent une clé partagée, et dans lequel le procédé comprend :
la génération d'un défi (304) ;
l'envoi du défi au SoC (306) ;
la génération d'une réponse attendue au défi (308), déterminée à partir du défi et de la clé partagée ;
la réception d'une réponse au défi de la part du SoC (310) ;
la comparaison de la réponse au défi et de la réponse attendue au défi (312) ;
et en fonction d'un état de fonctionnement et en réponse au fait que la réponse au défi est différente de la réponse attendue au défi :
(i) l'application d'une réinitialisation au SoC, ou
(ii) l'alimentation d'un sous-ensemble de la pluralité de domaines de puissance du SoC et/ou
(iii) l'activation d'horloges d'un sous-ensemble de la pluralité de domaines d'horloge du SoC.

13. Procédé selon la revendication 12, dans lequel l'état de fonctionnement est un état de fonctionnement sûr, le procédé comprenant en outre la fourniture d'énergie à un domaine de puissance critique pour la sécurité du SoC en réponse au fait que la réponse au défi est différente de la réponse attendue au défi.

14. Procédé selon la revendication 12 ou 13, dans lequel l'état de fonctionnement est un état de fonctionnement sûr, le procédé comprenant en outre le retrait d'énergie d'un domaine de puissance de sécurité du SoC en réponse au fait que la réponse au défi est différente de la réponse attendue au défi.
